# Europäisches Patentamt

## European Patent Office

## Office européen des brevets

(19)

(11) Veröffentlichungsnummer: **0 187 312**
**B1**

(12) **EUROPÄISCHE PATENTSCHRIFT**

(45) Veröffentlichungstag der Patentschrift:
**19.04.89**

(21) Anmeldenummer: **85115949.1**

(22) Anmeldetag: **13.12.85**

(51) Int. Cl.⁴: **H 02 J 3/01,** H 02 H 7/16,
H 01 G 1/16, H 03 H 5/02

(54) **Saugkreis.**

(30) Priorität: **08.01.85 CH 59/85**

(43) Veröffentlichungstag der Anmeldung:
**16.07.86 Patentblatt 86/29**

(45) Bekanntmachung des Hinweises auf die Patenterteilung:
**19.04.89 Patentblatt 89/16**

(84) Benannte Vertragsstaaten:
**CH DE FR GB IT LI**

(56) Entgegenhaltungen:
**CH-A-470 781**
**US-A-2 928 995**
**US-A-3 248 607**

(73) Patentinhaber: **BBC Brown Boveri AG,
Haselstrasse, CH- 5401 Baden (CH)**

(72) Erfinder: **Blahous, Leopold, Dr., Lindenhof 8, CH-
5430 Wettingen (CH)**
Erfinder: **Linhofer, Gerhard, Allmendstrasse 33A,
CH- 5400 Baden (CH)**

EP 0 187 312 B1

LIBER, STOCKHOLM 1989

## Beschreibung

Bei der Erfindung wird ausgegangen von einem Saugkreis zum Ausfiltern eines Oberschwingungsstromes in elektrischen Leitungen nach dem Oberbegriff des Patentanspruchs 1.

Beim Betrieb von Stromrichtern entstehen in den wechselstromseitigen Zuleitungen des Stromrichters Oberschwingungsströme mit Frequenzen, welche ein ganzzahliges Vielfaches der Grundfrequenz sind. Im Wechselspannungsnetz werden dadurch Spannungsverzerrungen hervorgerufen. Von besonderer Bedeutung sind hierbei die sogenannten charakteristischen Oberschwingungen niedriger Ordnungszahl, bei denen die Oberschwingungsströme einen beträchtlichen Anteil des Grundschwingungsstromes erreichen können. Beispielsweise bei einer sechsspuligen Drehstrombrückenschaltung sind die Oberschwingungen mit Ordnungszahlen 5, 7, 11 und 13 dominierend und bestimmen im wesentlichen die auftretende Spannungsverzerrung.

Zum Fernhalten der Oberschwingungsströme vom Wechselstromnetz und damit zur Reduktion der Spannungsverzerrung werden vielfach Saugkreise, auch Filter genannt, eingesetzt. Sie werden im Wechselstromnetz parallel zur Oberschwingungsquelle geschaltet. Jeder Saugkreis besteht in seiner einfachsten Ausführungsart aus einer Reihenschaltung eines Kondensators und einer Drossel. Abgestimmt auf eine bestimmte Frequenz (Frequenz eines dominant auftretenden Oberschwingungsstromes) bildet jeder Saugkreis für diese Frequenz eine sehr kleine Impedanz, was zur Folge hat, dass der entsprechende Oberschwingungsstrom anstatt ins Netz zum grössten Teil in den Saugkreis fliesst.

Aus Kostengründen ist man daran interessiert, die Grundschwingungsblindleistung und damit die Baugrösse eines derartigen Saugkreises möglichst klein zu halten. Eine untere Grenze für die Bauleistung ergibt sich aus der für die Wirksamkeit des Saugkreises massgeblichen Forderung, dass unter Berücksichtigung verschiedener Toleranzen und Abweichungen von Nennbedingungen ein Grenzimpedanzwert nicht überschritten wird.

Zu berücksichtigen sind dabei:

- Frequenzänderungen im Drehstromnetz. Im stationären Betrieb sind Frequenzänderungen in der Regel sehr klein, in den weitaus meisten Fällen kleiner als 0,5 %.
- Fabrikationstoleranzen der Bauelemente: Kondensatoren und Drosseln. Diese liegen in der Grössenordnung von 3 %. Durch bauliche Massnahmen an der Drossel (Anzapfungen oder geteilte Drossel mit veränderbarem Abstand der beiden Drosselhälften) können diese Fabrikationstoleranzen weitgehendst korrigiert werden.
- Temperaturabhängige Änderung der Kapazität der Kondensatoren. Bei den heute üblichen Kondensatoren mit modernen Dielektrika beträgt die Änderung bei üblichen
  Betriebstemperaturen ca. 2 %, bei extremen klimatischen Bedingungen etwas mehr.
- Ausfall einer Kondensatoreinheit. Kondensatorbatterien von Saugkreisen bestehen aus einzelnen Kondensatoreinheiten, welche sowohl parallel als auch in Serie geschaltet werden. Die einzelnen Kondensatoren sind durch Sicherungen geschützt. Bei einem internen Fehler in einer Kondensatoreinheit wird diese von der Sicherung vom Rest der Kondensatorbatterie abgetrennt. Dies hat eine Änderung der Gesamtkapazität der Kondensatorbatterie zur Folge. Aus Gründen der Anlagenverfügbarkeit besteht meist die Forderung, dass bei Ausfall einer Kondensatoreinheit die Wirksamkeit des Saugkreisess erhalten bleibt und keine Abschaltung erfolgen darf. Erst bei Ausfall von mehreren Kondensatoreinheiten darf der Saugkreis ausser Betrieb genommen werden. Für die Kondensatorbatterie ist dazu eine Schutz-Überwachungseinrichtung vorgesehen, welche den Ausfall einer Kondensatoreinheit meldet und bei Ausfall von mehreren Einheiten eine Abschaltung bewirkt.

Einzelkondensatoren können mit maximalen Nennleistungen von 300 kVar - 350 kVar hergestellt werden. Sollen Saugkreise mit möglichst kleiner installierter Grundschwingungsblindleistung Verwendung finden, so ergibt sich des öfteren die Notwendigkeit, Kondensatoreinheiten mit kleineren Nennleistungen zu verwenden, da sonst der Ausfall einer Einheit zu einer unzulässigen Verstimmung des Saugkreises führen würde. Die Verwendung von Kondensatoren kleiner Einheitsleistung verhindert eine kostengünstige Auslegung der Kondensatorbatterien.

Mit dem Oberbegriff nimmt die Erfindung auf einen Stand der Technik von Saugkreisen Bezug, wie er aus der CH-A-470 781 bekannt ist. Dort sind bei einem Ankopplungsfilter einer Rundsteuersendeanlage mehrere Kondensatoren einer Kondensatorbatterie in Brückenschaltung angeordnet. Zur Überwachung des Ausfalls eines Kondensators ist in einem Diagonalzweig der Brückenschaltung ein Relais und parallel dazu eine Sättigungsdrossel vorgesehen, um das Relais vor Überspannungen zu schützen. Falls anstelle des Relais als Überwachungsglied ein Stromwandler mit Sättigungscharakteristik verwendet wird, kann auf die Sättigungsdrossel verzichtet werden.

Aus der US-A-3 248 607 ist eine Anordnung zum stufenweisen Schalten einer Kondensatorbatterie bekannt, bei der Drosseln lediglich zur Strombegrenzung vorgesehen sind. Die Kompensation eines Ausfallens von Einzelkondensatoren ist dabei weder vorgesehen noch angestrebt.

Zum einschlägigen Stand der Technik wird zusätzlich auf das Buch von Erich Uhlmann, Power Transmission by Direct Current, Springer-Verlag Berlin, Heidelberg, New York 1975, S. 368 - 379, insbesondere auf S. 378, Fig. 23.8, hingewiesen. Dort wird für den Saugkreis eine Kondensatorbatterie in "H"-Schaltung verwendet, mit r (z. B. 2 x 2) parallelgeschalteten Zweigen, wobei in jedem Zweig s Elemente (z. B. 4 Kondensatoren) in Reihe geschaltet sind. Jedes der r.s Elemente ist durch eine Sicherung geschützt. Wenn diese Sicherungen $\Delta r$ parallelgeschaltete Elemente trennen, dann erhalten die verbleibenden parallelgeschalteten Elemente eine erhöhte Spannung, die einen vorgebbaren Wert von z. B. 125 % Nennspannung nicht überschreiten darf, um einen Filter-Ausfall zu verhindern. Der Ausfall einer oder mehrerer Kondensatoreinheiten bewirkt das Fliessen eines Ausgleichsstromes in der Querverbindung der "H"-Schaltung, welcher mittels eines oder mehrerer Stromwandler im Querzweig der "H"-Schaltung erfasst und zur Fehleranzeige verwendet wird. Sind alle vier Teilbatterien genau gleich gross, so fliesst kein Ausgleichstrom.

2

Die Erfindung, wie sie im Patentanspruch 1 definiert ist, löst die Aufgabe, einen Saugkreis zum Ausfiltern eines Oberschwingungsstromes in elektrischen Leitungen anzugeben, bei dessen Abstimmfrequenz die virtuelle Kapazität der Filterkondensatorschaltung bzw. der Kondensatorbatterie auch dann ihren Nennwert behält, wenn sich durch Ausfall von Einzelkondensatoren in einer Teilbatterie deren Kapazität ändert.

Ein Vorteil der Erfindung besteht darin, dass Saugkreise mit sehr kleiner Grundschwingungsblindleistung hergestellt werden können, bei welchen der Ausfall von mindestens einer Kondensatoreinheit keine Änderung der Abstimmfrequenz hervorruft. Beim Ausfall einer Kondensatoreinheit braucht der Saugkreis nicht vom Stromnetz abgeschaltet zu werden. Die in der Filterkondensatoreinheit vorgesehene Ausgleichdrossel kann für eine relativ kleine Leistung von 5 % - 10 % der Leistung der Filterdrossel ausgelegt sein. Die Grösse der Kondensatorbatterie der Filterkondensatoreinheit und die Anzahl der erforderlichen Einzelkondensatoren kann verringert werden. Daraus resultiert eine beachtliche Einsparung von Bauelemente-Kosten, insbesondere bei Saugkreisen, die für Nennleistungen im Bereich von 1 MVar - 1 GVar eingesetzt werden, insbesondere bei Hochspannungsgleichstrom-Übertragungsanlagen (HGÜ).

Die Erfindung wird nachstehend anhand von Ausführungsbeispielen erläutert. Es zeigen:

Fig. 1     einen an einen Phasenleiter eines Drehstromnetzes angeschlossenen Saugkreis mit einer Ausgleichdrossel in der Querverbindung einer "H"-Schaltung der Filterkondensatorschaltung,

Fig. 2     einen Saugkreis gemäss Fig. 1 mit n parallelgeschalteten Kondensatorreihenschaltungen in der Filterkondensatorschaltung,

Fig. 3     einen Saugkreis gemäss Fig. 1 mit n Kondensatoren je Kondensatorreihenschaltung der Filterkondensatorschaltung,

Fig. 4     einen Saugkreis mit einer Ausgleichdrossel einer Kondensatorreihenschaltung der Filterkondensatorschaltung und

Fig. 5     eine Kondensator-Teilbatterie der Filterkondensatorschaltung gemäss den Fig. 1 bis 4.

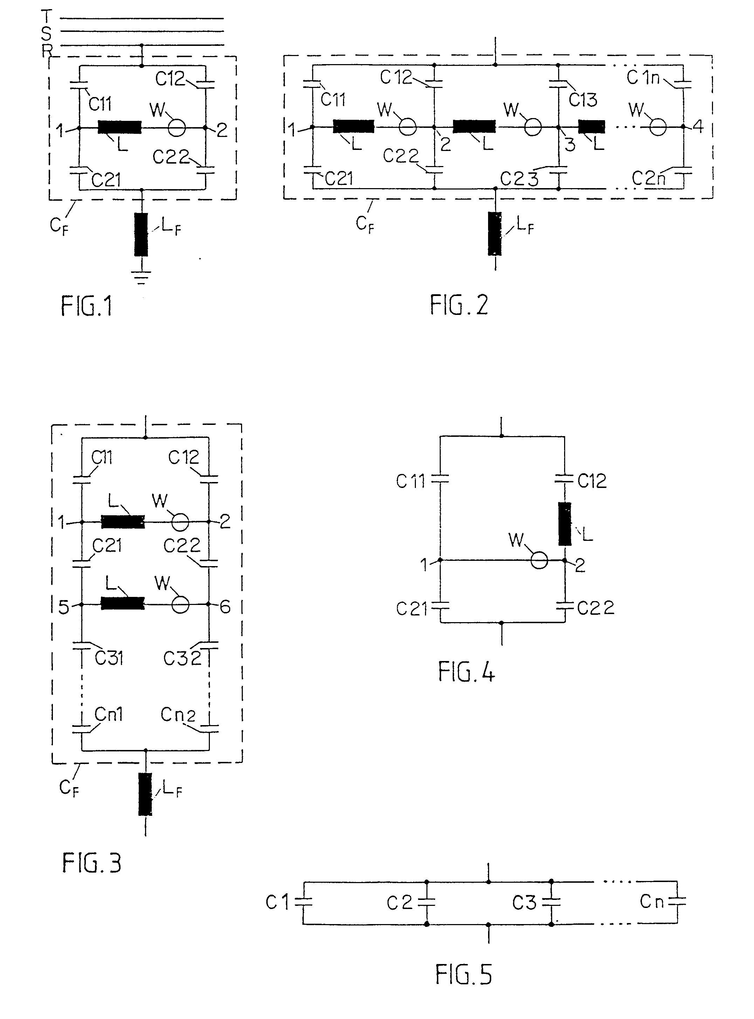

In Fig. 1 sind mit R, S, T Phasenleiter bzw. 20-kV-Sammelschienen eines Drehstromnetzes bezeichnet. Es können in bekannter Weise an jeden Phasenleiter auch weitere Saugkreise für die 7., 11., 13. usw. harmonische Oberschwingung angeschlossen sein. Der Einfachheit halber ist nur ein Saugkreis aus einer Reihenschaltung einer Filterkondensatorschaltung $C_F$ und einer Filterdrossel $L_F$ eingezeichnet. Der Phasenleiter R ist über diesen Saugkreis geerdet.

Die Filterkondensatorschaltung $C_F$ besteht aus einer "H"-Schaltung von Kondensatoren mit einer ersten Kondensator-Reihenschaltung aus Kondensatoren bzw. Kondensator-Teilbatterien C11 und C21, einer zur ersten Kondensator-Reihenschaltung parallelgeschalteten zweiten Kondensator-Reihenschaltung aus Kondensatoren bzw. Kondensator-Teilbatterien C12 und C22 und einem Querzweig aus einer Reihenschaltung einer Ausgleichdrossel L und einem Stromwandler bzw. Stromdetektor W. Dieser Querzweig ist einerseits an eine Klemme bzw. elektrische Verbindungsstelle 1 der beiden Kondensatoren C11 und C21 und andererseits an eine elektrische Verbindungsstelle 2 der beiden Kondensatoren C12 und C22 angeschlossen. Jeder der Kondensatoren C11 ... C22 hat eine gleich grosse Kapazität C, so dass gilt: C11 = C21 = C12 = C22 = C, wobei der Einfachheit halber die Bezeichnung der Kondensatoren auch zur Bezeichnung von deren Kapazität verwendet wird. Damit wird auch die Gesamtkapazität der Filterkondensatorschaltung $C_F = C$. Die der Einfachheit halber ebenfalls mit L bezeichnete Induktivität der Ausgleichdrossel L ist so bemessen, dass $L = 1/(j \omega C)$ ist, $j = \sqrt{-1}$, $\omega = 5 \cdot 2 \cdot \pi \cdot f_0$ = Kreisfrequenz der 5. Oberschwingung, $f_0 = 50$ Hz = Grundfrequenz des Drehstromes.

Der Ausfall einer oder mehrerer Kondensatoreinheiten C11 ... C22 bewirkt das Fliessen eines Ausgleichstromes in der Querverbindung der "H"-Schaltung, welcher durch den dort installierten Stromwandler W erfasst wird. Sind alle vier Kondensatoreinheiten C11 ... C22 intakt, so fliesst kein Ausgleichstrom. Das Einfügen der Ausgleichdrossel L in die "H"-Schaltung bewirkt bei richtiger Dimensionierung, dass bei der Abstimmfrequenz des Saugkreises die virtuelle Kapazität der Kondensatorbatterie auch dann ihren Nennwert behält, wenn sich durch Ausfall von Einzelkondensatoren einer Teilbatterie deren Kapazität ändert. Jeder Kondensator bzw. jede Teilbatterie C11 ... C22 besteht aus mehreren untereinander parallelgeschalteten Einzelkondensatoren C1, C2, C3 ... Cn, siehe Figur 5.

Bei dem in Fig. 2 dargestellten Saugkreis weist die Filterkondensatorschaltung $C_F$ n parallelgeschaltete Kondensator-Reihenschaltungen mit jeweils 2 in Reihe geschalteten Kondensatoren C11 und C21, C12 und C22, C13 und C23 ... C1n und C2n auf, n positiv ganzzahlig. Zwischen je zwei elektrischen Verbindungspunkten 1 ... 4 zweier in Reihe geschalteter Kondensatoren C11 und C21 ... C1n und C2n ist eine Ausgleichdrossel L in Reihe mit einem Stromwandler W geschaltet.

Bei der in Fig. 3 dargestellten Ausführung eines Saugkreises weist die Filterkondensatorschaltung $C_F$ zwei parallelgeschaltete Kondensator-Reihenschaltungen mit jeweils n in Reihe geschalteten Kondensatoren C11, C21, C31 ... Cn1 bzw. C12, C22, C32 ... Cn2 auf. Je zwei sich spannungsmässig entsprechende elektrische Verbindungsstellen 1 und 2, 5 und 6 usw. der Kondensatoren C11, C21 und C12, C22 bzw. C21, C31 und C22, C32 usw. sind über je eine Ausgleichdrossel L in Reihe mit einem Stromwandler W miteinander elektrisch verbunden.

Für eine bestimmte Frequenz ω ergibt sich als Gesamtimpedanz Z der Schaltung unter Vernachlässigung der Verluste:

$$Z = \frac{1}{j\omega} \cdot \frac{C11 + C12 + C21 + C22 - \omega^2 L \cdot (C12 + C22) \cdot (C11 + C21)}{(C11 + C12) \cdot (C21 + C22) - \omega^2 L \cdot [C11 \cdot C12 \cdot (C21 + C22) + C21 \cdot C22 \cdot (C11 + C12)]} \qquad \text{(I)}$$

Für C11 = C12 = C21 = C22 = C ergibt sich wieder:

$$Z = \frac{1}{j\omega C} \tag{2}$$

unabhängig von der Grösse von L.

Die Induktivität L kann nun nach zwei Kriterien gewählt werden, um die Gesamtkapazität unempfindlich gegen den Verlust von Einzelkondensatoren zu machen.

a) Für den Fall, dass $C11 = C12 = C21 = C22 = C$ ist, wird:

$$L = \frac{1}{\omega^2 C} \cdot \tag{3}$$

Ändert sich dann die Kapazität in einer Teilbatterie und wird z. B. $C11 \neq C12 = C21 = C22 = C$, so bleibt die virtuelle Kapazität $C_0$ der gesamten Kondensatorbatterie bei einer Abstimmfrequenz unverändert:

$$C_0 = \frac{2 \cdot C \cdot C11 + 2 \cdot C^2 - (\omega^2/\omega^2 \cdot C) \cdot (2 \cdot C \cdot C11^2 + C11 \cdot C^2 + C^2)}{C11 \cdot 3 \cdot C - (\omega^2/\omega^2 \cdot C) \cdot 2 \cdot C \cdot C11 - (\omega^2/\omega^2 \cdot C) \cdot 2 \cdot C^2} = C. \tag{4}$$

Das gleiche Ergebnis erhält man für $C12 \neq C11 = C21 = C22 = C$, $C21 \neq C11 = C12 = C22 = C$ und $C22 \neq C11 = C12 = C21 = C$. Dabei kann die Kapazität der gestörten Teilbatterie von Null (ganze Teilbatterie weggeschaltet) bis unendlich (Teilbatterie kurzgeschlossen) variieren, ohne dass sich am Ergebnis von Gleichung (4) etwas ändert. Voraussetzung ist lediglich, dass nicht gleichzeitig auch Kapazitätsänderungen in den anderen Teilbatterien auftreten.

Weiter sieht man, dass die in die Querleitung zu schaltende Ausgleichdrossel L die gleiche Induktivität hat wie die Hauptdrossel bzw. die Filterdrossel $L_F$ eines Saugkreises. Da aber der in der Querverbindung fliessende Ausgleichstrom in der Regel wesentlich kleiner ist als der Gesamtstrom im Saugkreis, kann diese Zusatzdrossel auf einen Bruchteil der Bauleistung der Hauptdrossel $L_F$ ausgelegt sein.

b) Soll die gesamte Kondensatorbatterie gegen gleichzeitige Änderungen in allen Teilbatterien tolerant gemacht werden, so können die Bauelemente des Saugkreises nach folgenden Bedingungen ausgelegt werden:

$$Z(C11, C12, C21, C22, L, \omega) = \frac{1}{j\omega C}, \tag{5}$$

$\partial Z/\partial C11 = 0$,
$\partial Z/\partial C12 = 0$,
$\partial Z/\partial C21 = 0$,
$\partial Z/\partial C22 = 0$.

Eine Änderung der Kapazität in jeder der vier Teilbatterien C11, C12, C21 und C22 um einen jeweils unterschiedlichen

$$\begin{aligned}
&Z(C11 + \Delta C11, C12 + \Delta C12, C21 + \Delta C21, C22 + \Delta C22, L, \omega) = \\
&Z(C11, C12, C21, C22, L, \omega) + (\partial Z/\partial C11) \cdot \Delta C11 + \\
&(\partial Z/\partial C12) \cdot \Delta C12 + (\partial Z/\partial C21) \cdot \Delta C21 + (\partial Z/\partial C22) \cdot \Delta C22 = \\
&Z(C11, C12, C21, C22, L, \omega) = 1/(j\omega C),
\end{aligned} \tag{6}$$

aber kleinen Betrag $\Delta C11$, $\Delta C12$, $\Delta C21$ und $\Delta C22$ ergibt eine neue Gesamtimpedanz da die Glieder $\partial Z/\partial Ci$ für die nach Gleichung (5) bestimmten Werte verschwinden.

Eine Kondensatorbatterie, die nach Gleichung (5) ausgelegt wird, ist natürlich nur gegen solche Änderungen unempfindlich, welche klein genug sind, dass die Näherung von Gleichung (6) die Änderung der Gesamtimpedanz richtig beschreibt.

Gleichung (5) stellt ein nichtlineares Gleichungssystem für die unbekannten Grössen C11, C12, C21, C22 und L bei der Resonanzfrequenz $\omega/2\pi$ dar. Die Lösung solcher Gleichungssysteme kann z. B. nach dem Newton-Raphson-Verfahren bestimmt werden, wie es in dem Buch von Joseph Stoer, Einführung in die numerische Mathematik 1, Springer-Verlag Berlin, Heidelberg, New York 1976, S. 217 - 221 beschrieben ist. Da Gleichung (5) ein allgemeines Verfahren für Zweipole mit vier Kondensatoren in "H"-Schaltung mit einer Induktivität in der Kondensatorbatterie beschreibt, ist das Verfahren auch für Varianten mit einer Ausgleichdrossel L in Reihe zu einer Teilkapazität C12, C22, z. B. nach Fig. 4, anwendbar.

Die in Fig. 4 dargestellte Filterkondensatorschaltung $C_F$ unterscheidet sich von derjenigen der Fig. 1 durch die andere Anordnung der Ausgleichdrossel L, die hier mit den Kondensatoren C12 und C22 in Reihe geschaltet ist, und zwar zwischen der elektrischen Verbindungsstelle 2 und dem Kondensator C12. Der Stromwandler W detektiert einen bei einem Kondensatorausfall auftretenden Ausgleichstrom wie bei der Schaltung gemäss Fig. 1.

Die Kondensatoren bzw. Teilbatterien C11... Cnn der Schaltungen gemäss den Fig. 1 - 4 können jeweils untereinander parallelgeschaltete Einzelkondensatoren gemäss Fig. 5 aufweisen.

Nachstehend wird ein bevorzugtes Ausführungsbeispiel zu der in Fig. 1 dargestellten Saugkreisschaltung wiedergegeben.

Der Übersichtlichkeit halber ist der Einfluss der Netzreaktanz sowie die Dämpfung (Verluste) der Filterkomponenten nicht berücksichtigt.

An jeden Phasenleiter R, S, T einer 20-kV-Sammelschiene ist ein Saugkreis angeschlossen, welcher auf die 5. harmonische Oberschwingung abgestimmt ist.

Für den Saugkreis besteht die Forderung, dass ein Oberschwingungsstrom $I_5$ von 500 A eine Spannungsverzerrung D von nicht mehr als 1 % verursacht.

Die Fertigungstoleranz der Saugkreisdrossel beträgt ± 3 %. Die Fertigungstoleranz der Saugkreiskondensatoren sowie die temperaturbedingte Änderung der Kapazität ergeben zusammen eine Toleranz von ± 5 %. Bei Ausfall eines Einzelkondensators soll die Saugkreiswirkung erhalten bleiben.

Ausgangsdaten:

$U = 20$ kV            Sammelschienenspannung,
$I_5 = 100$ A          Oberschwingungsstrom,
$f_0 = 50$ Hz          Grundfrequenz,
$\omega = 5 \cdot 50 \cdot 2\pi = 1570,8$ s$^{-1}$     Kreisfrequenz der Oberschwingung,
$5 = 250$ Hz          Abstimmfrequenz des Saugkreises,
$D \leq 1$ %            zulässige Spannungsverzerrung.

Die maximale Oberschwingungsspannung $U_5$ ergibt sich nach:

$U_5 = (20000/\sqrt{3}) \cdot D/100 = 115,5$ V.

Für die maximal zulässige Saugkreisimpedanz $Z_{max}$ erhält man:

$Z_{max} = U_5/I_5 = 115,5/100 \; \Omega = 1,155 \; \Omega$.

Die Saugkreisschaltung besteht aus vier gleich grossen Teilbatterien in "H"-Schaltung gemäss Fig. 1, wobei jede Teilbatterie aus n parallelgeschalteten Einzelkondensatoren C1 ... Cn gemäss Fig. 5 besteht.

Die Kapazität einer Teilbatterie sei C. Damit wird auch die Kapazität der gesamten Kondensatorbatterie = C.

Die Kapazität eines Einzelkondensators beträgt $C' = C1 = C2 = ... Cn = C/n$.

Für die Auslegung auf Abstimmfrequenz gilt:

$$Z_0 = j\omega L + \frac{1}{j\omega C} = 0 \text{ und } L = \frac{1}{\omega^2 C}.$$

Da für die vereinfachte Rechnung resistive Anteile nicht berücksichtigt werden, wird im folgenden "j" weggelassen.

Bei erfindungsgemässem Aufbau der Kondensatorbatterie mit der zusätzlichen Kompensationsdrossel L im Querzweig hat der Ausfall eines Einzelkondensators keinen Einfluss. Die notwendige Grösse der Bauelemente ergibt sich aus den eingangs genannten Fertigungs- und Temperaturtoleranzen nach folgenden Beziehungen:

$Z_{max} = | \omega(L - \Delta L) - 1/[\omega(C - \Delta C)]| = 1,155 \; \Omega$,
$L - \Delta L = 0,97 \cdot L$,
$C - \Delta C = 0,95 \cdot C$,
$L = 1/(\omega^2 C)$,
$Z_{max} = 1/(0,95 \cdot \omega \cdot C) - 0,97/(\omega \cdot C)$,
$\omega \cdot C \cdot Z_{max} = 1,053 - 0,97 = 0,0826$,
$C = 0,0826/(\omega \cdot Z_{max}) = 0,0826/(1570,8 \cdot 1,155) \; F = 45,5 \; \mu F$,
$L = 8,9$ mH.

An Hand der Grund- und Oberschwingungsbelastung der Kondensatoren kann nun die Baugrösse und die Anzahl der Einzelkondensatoren bestimmt werden. Für die definitive Auslegung wählt man z. B. aus dem Katalog eines Herstellers einen Kondensatortyp mit 12 $\mu$F und 12,6/$\sqrt{3}$ kV Nennspannung und schaltet pro Teilbatterie 4 Kondensatoren parallel.

Mit $C' = 12 \; \mu F$ und $n = 4$ erhält man:
$C = 1570,8$ s$^{-1} = n \cdot C' = 48 \; \mu F$ und
$L = 1/(1570,8^2 \cdot 12 \cdot 10^{-6}) = 8,45$ mH.

Wenn die Ausgleichdrossel L nicht vorhanden wäre, so müsste die Auswirkung eines Einzelkondensatorausfalles zusätzlich berücksichtigt werden. Bei Ausfall eines Kondensators ändert sich die Gesamtkapazität wie folgt:.

$$C_g = \frac{(2 \cdot n \cdot C') \cdot ((2 \cdot n - 1)C')}{2 \cdot n \cdot C' + (2 \cdot n - 1) \cdot C'} = \frac{2 \cdot n \cdot (2 \cdot n - 1) \cdot C'}{4 \cdot n - 1} = n \cdot C' \cdot (4 \cdot n - 2)/(4 \cdot n - 1) = C \cdot (4 \cdot n - 2)/(4 \cdot n - 1).$$

Mit $n \cdot C' = C$ ergibt sich daraus:

$$Z_{max} = \frac{1}{0,95 \cdot \omega \cdot C} \cdot \frac{4 \cdot n - 1}{4 \cdot n - 2} - \frac{0,97}{\omega \cdot C},$$

$$\omega \cdot C \cdot Z_{max} = \frac{4 \cdot n - 1 - 0,97 \cdot 0,95 \cdot (4n - 2)}{0,95 \cdot (4 \cdot n - 2)} = \frac{4 \cdot n - 3,686 \cdot n + 0,843}{3,8 \cdot n - 1,9} = \frac{0,314 \cdot n + 0,843}{3,8 \cdot n - 1,9}$$

$$= \frac{0,314 \cdot n + 0,843}{3,8 \cdot n - 1,9} \cdot \frac{1}{1570,8 \cdot 1,155} F.$$

Aus der Bedingung für die Grösse von C sieht man, dass entweder die Gesamtkapazität sehr gross gewählt werden muss oder die Installation einer grossen Anzahl von kleinen Einzelkondensatoren nötig ist, vgl. die nachfolgende Tabelle.

| n | C/$\mu$F |
|---|---|
| 1 | 335,6 |
| 2 | 142,2 |
| 3 | 103,6 |
| 4 | 87,0 |
| 5 | 77,8 |
| 6 | 71,9 |
| 7 | 67,9 |
| 8 | 64,9 |

Bei Wahl des eingangs genannten Kondensatortyps müssten anstatt 4 nunmehr 6 Einzelkondensatoren à 12 $\mu$F pro Teilbatterie vorgesehen werden. Die Anzahl der Kondensatoren je Kondensatorbatterie wird also um 50 % grösser.

Mit der erfindungsgemässen Filterkondensatorschaltung kann die erforderliche Grösse der Kondensatorbatterie und die Anzahl der Einzelkondensatoren minimiert werden. Da die Kondensatorbatterien an den Gesamtkosten eines Saugkreises den grössten Anteil ausmachen, ergibt sich dadurch eine insgesamt wirtschaftlichere Auslegung.

## Patentansprüche

1. Saugkreis zum Ausfiltern eines Oberschwingungsstromes in elektrischen Leitungen

a) mit einer Reihenschaltung mindestens einer Filterdrossel (L$_F$) und

b) mindestens einer Filterkondensatorschaltung (C$_F$),

c) wobei die Filterkondensatorschaltung eine erste Kondensator Reihenschaltung mindestens zweier Kondensatoren oder Kondensator-Teilbatterien (C11, C21,..., Cn1) und

d) mindestens eine zweite Kondensator-Reihenschaltung mindestens zweier Kondensatoren oder Kondensator-Teilbatterien (C12, C22,..., Cn2; C1n, C2n,..., Cnn) aufweist,

e) wobei die erste Kondensator-Reihenschaltung zu jeder weiteren Kondensator-Reihenschaltung der Filterkondensatorschaltung (C$_F$) parallelgeschaltet ist,

f) wobei die erste Kondensator-Reihenschaltung mindestens eine erste elektrische Verbindungsstelle (1, 5) zwischen zwei Kondensatoren oder Kondensator-Teilbatterien der ersten Kondensator-Reihenschaltung aufweist, die mit einer der ersten elektrischen Verbindungsstelle spannungsmässig entsprechenden zweiten elektrischen Verbindungsstelle (2, 6) zwischen zwei Kondensatoren oder Kondensator-Teilbatterien (C12, C22) jeder weiteren Kondensator Reihenschaltung der Filterkondensatorschaltung (C$_F$) über mindestens eine Ausgleichdrossel (L) in elektrisch leitender Verbindung steht,

# EP 0 187 312 B1

*dadurch gekennzeichnet,*

g) dass die Induktivität der Ausgleichdrossel (L) wenigstens annähernd gleich $1/(\omega^2 C)$ ist, $\omega$ gleich Kreisfrequenz der Oberschwingung, C gleich Gesamtkapazität der Filterkondensatorschaltung ($C_F$).

2. Saugkreis nach Anspruch 1, dadurch gekennzeichnet, dass mindestens ein Stromdetektor (W) zu der Ausgleichdrossel (L) in Reihe geschaltet ist.

3. Saugkreis nach Anspruch 1 oder 2, dadurch gekennzeichnet, dass die Kapazitäten aller Kondensatoren oder KondensatorTeilbatterien (C11, ...,Cnn) der Filterkondensatorschaltung ($C_F$) gleich gross sind.


## Claims

1. Series resonant circuit for filtering out a harmonic current in electric lines

a) having a series circuit of at least one filter reactor ($L_F$) and
b) at least one filter capacitor circuit ($C_F$),
c) the filter capacitor circuit exhibiting a first series capacitor circuit of at least two capacitors or part-capacitor-banks (C11, C21, ..., Cn1) and
d) exhibiting at least a second series capacitor circuit of at least two capacitors or part-capacitor-banks (C12, C22, ..., Cn2; C1n, C2n, ..., Cnn),
e) the first series capacitor circuit being connected in parallel with each further series capacitor circuit of the filter capacitor circuit ($C_F$),
f) the first series capacitor circuit exhibiting at least one first electric junction (1, 5) between two capacitors or part-capacitor-banks of the first series capacitor circuit which is in electrically conductive connection with a second electric junction (2, 6), which corresponds to the first electric junction with respect to voltage, between two capacitors or part-capacitor-banks (C12, C22) of each further series capacitor circuit of the filter capacitor circuit ($C_F$) via at least one compensating reactor (L), *characterized in that,*
g) the inductance of the compensating reactor (L) is at least approximately equal to $1/(\omega^2 C)$, where $\omega$ is equal to the angular frequency of the harmonic, and C is equal to the total capacitance of the filter capacitor circuit ($C_F$).

2. Series resonant circuit according to Claim 1, characterized in that at least one current sensor (W) is connected in series with the compensating reactor (L).

3. Series resonant circuit according to Claim 1 or 2, characterized in that the capacitances of all capacitors or part-capacitor-banks (C11, ..., Cnn) of the filter capacitor circuit (CF) are equally large.


## Revendications

1. Circuit d'absorption pour filtrer un courant harmonique dans des lignes électriques comportant:

a) un montage en série d'au moins une réactance de filtrage ($L_F$) et
b) d'au moins un circuit à condensateurs de filtrage ($C_F$),
c) le circuit à condensateurs de filtrage comportant un premier montage en série d'au moins deux condensateurs ou batteries partielles de condensateurs (C11, C21 ... Cn1), et
d) au moins un second montage en série d'au moins deux condensateurs ou batteries partielles de condensateurs (C12, C22 ... Cn2; C1n, C2n ... Cnn),
e) le premier montage en série de condensateurs étant connecté en parallèle à chaque autre montage en série de condensateurs du circuit à condensateurs de filtrage ($C_F$),
f) le premier montage en série de condensateurs comportant au moins un premier point de jonction électrique (1, 5) entre deux condensateurs ou batteries partielles de condensateurs, qui est connecté de manière conductrice à un second point de jonction électrique (2, 6), correspondant en tension, entre deux condensateurs ou batteries partielles de condensateurs (C12, C22) de chaque autre montage en série de condensateurs du circuit à condensateurs de filtrage ($C_F$), par l'intermédiaire d'au moins une réactance de compensation (L), *caractérisé en ce que,*
g) l'inductance de la réactance de compensation (L) est au moins approximativement égale à $1/(\omega^2 C)$, $\omega$ étant égal à la fréquence angulaire de
l'harmonique et C étant égal à la capacité totale du circuit à condensateurs de filtrage ($C_F$).

7

2. Circuit d'absorption suivant la revendication 1, caractérisé en ce qu'au moins un détecteur de courant (W) est connecté en série avec la réactance de compensation (L).

3. Circuit d'absorption suivant la revendication 1 ou 2, caractérisé en ce que les capacités de tous les condensateurs ou de toutes les batteries partielles de condensateurs (C11 ... Cnn) du circuit à condensateurs de filtrage (CF) sont de valeurs égales.

FIG.1

FIG.2

FIG.3

FIG.4

FIG.5